# FASCICULE DE BREVET EUROPEEN

(11) **EP 1 388 830 B1**
(45) Date de publication et mention de la délivrance du brevet: **27.11.2019**
(21) Numéro de dépôt: 02291964.1
(22) Date de dépôt: 05.08.2002
(51) Int. Cl.: G08C 17/02, H04Q 9/00, H04M 11/00

(54) **Système et procédé de gestion à distance d'équipements**
Verfahren und System zur Fernsteuerung von Geräten
System and method for remote management of equipment

(43) Date de publication de la demande: 11.02.2004
(73) Titulaire: Orange, 75015 Paris (FR)
(72) Inventeur: Barranco, Jocelyn, 92130 Issy les Moulineaux (FR); Gruson, Manuel, 75014 Paris (FR); Kiessling, Lars, 92130 Issy les Moulineaux (FR)

(56) Documents cités:
- EP-A- 0 959 606
- WO-A-01/01366
- WO-A-01/97555
- FR-A- 2 814 899

## Description

La présente invention concerne un système et un procédé de gestion à distance d'équipements.

L'invention s'applique plus particulièrement à la gestion centralisée d'un ensemble d'équipements raccordés à un ensemble de réseaux, chacun des réseaux indifféremment fixes ou mobiles.

Les systèmes existants de gestion à distance permettent de contrôler un ensemble d'équipements à partir d'un poste de supervision.

Par exemple, les équipements sont munis d'un ou plusieurs capteurs pour mesurer ou pour relever une grandeur physique, comme la valeur ou la présence d'une tension électrique.

Lesdits équipements sont également munis d'un module de communication, qui permet la transmission de messages vers un poste de supervision par l'intermédiaire d'un réseau de communication, auxquels sont raccordés tous lesdits équipements ainsi que ledit poste de supervision.

Par conséquent, lesdits équipements ainsi que ledit poste de supervision doivent communiquer entre eux grâce à un même réseau de communication ou bien à des réseaux de communication de technologie identique.

Actuellement, lorsqu'une information est fournie par l'un des capteurs d'un équipement, deux solutions sont possibles avant la transmission vers le poste de supervision.

Pour la première solution, le traitement de ladite information est réalisé directement par au moins un dispositif de traitement dudit équipement. Alors, ledit équipement doit avoir la capacité d'analyser l'information et de continuer à transmettre celle-ci, notamment en cas de panne de fonctionnement, vers ledit poste de supervision.

De ce fait, les équipements à surveiller doivent chacun être muni au moins dudit dispositif de traitement d'informations, qui représente un matériel supplémentaire et augmente le coût de chacun desdits équipements.

Prenons l'exemple de la surveillance d'un équipement pour la détection d'une panne. Ledit équipement reçoit une information en provenance d'au moins un capteur. Celui-ci doit analyser ladite information pour vérifier par exemple la valeur de la grandeur reçue par rapport à une valeur de seuil minimum. Malgré la panne, il doit également transmettre vers un poste de supervision une alerte concernant ladite information traitée, notamment en étant équipé d'une batterie de secours.

Pour la deuxième solution, le traitement de ladite information est réalisé par le poste de supervision après la transmission par ledit équipement. Alors, ledit poste de supervision doit avoir la capacité de comprendre les informations transmises par tous les équipements. Comme il est régulièrement sollicité par les différents équipements qu'il supervise, il doit être prêt à recevoir lesdites informations à tout moment pour les analyser rapidement.

La plupart du temps, ledit poste de supervision est particulier en fonction du domaine d'activité des équipements. Entre autres, il existera un poste de supervision différent pour gérer des compteurs d'eau et concernant la gestion de machines d'ascenseur. Le délai de traitement des informations est également différent s'agissant des compteurs d'eau ou bien de la gestion des machines d'ascenseur.

Dans l'exemple précédent de détection de panne, ledit équipement transmet directement l'information en provenance dudit capteur vers le poste de supervision. L'analyse et le traitement sont réalisés au niveau dudit poste de supervision, techniquement compatible avec ladite information transmise par ledit capteur.

De ce fait, le poste de supervision est un matériel spécifique, compatible avec les équipements avec lesquels il dialogue. Il représente alors un matériel complexe donc coûteux.

Dans le document EP 959 606 est présenté un dispositif de télécommunication permettant la réception de différentes valeurs mesurées, reçues localement par un module central local. Ledit module central transforme les valeurs reçues en signaux. Pour ce dispositif, une nouvelle implémentation est nécessaire à chaque cas spécifique d'utilisation et de signal. Un dispositif de télécommunication doit être monté et utilisé dans chaque bâtiment, appartement, bureau ou autre. Les signaux émis par le module central peuvent être transmis vers un système de gestion centralisée pour traitement. Aucune gestion complexe ni script de traitement ne sont décrit dans le document.

Le document WO 01/97555 concerne un système de réception et de traçabilité des conditions d'environnement et des données de télémétrie grâce à des capteurs. Ces données sont fournies lors d'un processus de transport, de livraison et de commerce de denrées alimentaires, de manière à vérifier la chaîne du froid. Ce système permet de relever les données de manière à les mettre en ligne en temps réel. Ces données sont alors accessibles sur un site web grâce à un stockage dans une base de données centrale. De la même manière, aucune gestion complexe ni script de traitement ne sont décrit dans le document.

Dans le document WO 01/01366 est présenté un système de surveillance à distance de différents biens et équipements, avec un module local de contrôle. Les informations à mesurer sont des caractéristiques spécifiques transmises par des capteurs ou transducteurs. Les biens et équipements sont proches du système ou bien le système est mis en place dans un réseau, tel que le réseau Internet. Il n'y a pas de système centralisé de gestion. Le système présenté dans le document ne permet aucune gestion complexe ni script de traitement.

Par conséquent, lesdits systèmes existants sont réservés pour des équipements qui permettent des transmissions et des traitements d'informations. La mise en place coûteuse des dispositifs de traitement nécessaires, soit au niveau de chacun desdits équipements, soit au niveau dudit poste de supervision, limite l'utilisation desdits systèmes de gestion à distance d'équipements.

Aussi, le problème technique à résoudre par l'objet de la présente invention est de proposer un système et un procédé de gestion à distance d'un ensemble d'équipements par l'intermédiaire d'au moins un réseau de télécommunications, qui permettrait de remédier aux inconvénients des systèmes existants en évitant la mise en place de dispositifs spécifiques et coûteux pour réaliser ladite gestion à distance. Selon l'invention, une plateforme et un procédé sont respectivement fournis par les revendications indépendantes 1 et 10.

La solution au problème technique posé consiste, selon la présente invention, en ce que ledit système comprend au moins une plate-forme de communication, centralisée et unique pour l'ensemble desdits équipements et compatible avec la transmission de chaque module de communication desdits équipements et adaptable par un paramétrage centralisé, apte à gérer un ensemble de communications adaptées à la gestion dudit ensemble d'équipements, apte à stocker au moins un traitement comportant une liste composée d'au moins une règle à appliquer et d'au moins une action à générer après réception d'au moins un message en provenance d'au moins un des équipements et apte à analyser automatiquement par au moins un script associé à ladite liste et à traiter ledit message en fonction desdits traitement et script stockés.

La plate-forme de communication est commune à tous les équipements. Elle évite la mise en place de différents postes de supervision en fonction entre autres du domaine d'activité ou de la zone géographique desdits équipements.

Ladite plate-forme de communication s'adapte aux différentes technologies rencontrées, entre autres, concernant les différents modules de communication installés sur les équipements, concernant la nature des différents réseaux de communication sur lesquels lesdits modules de communication sont raccordés ou concernant la nature des transmissions réalisées sur des réseaux fixes ou mobiles.

Comme l'exploitation est commune pour un ensemble d'équipements, la plate-forme de communication est fonctionnelle pendant une période de temps plus large, par exemple 24 heures sur 24 et 7 jours sur 7, avec un coût plus économique pour chacun des abonnés, gestionnaires desdits équipements.

Selon l'invention, ledit traitement d'un message, stocké dans ladite plate-forme de communication, comporte une liste composée d'au moins une règle à appliquer et d'au moins une action à générer après réception dudit message par ladite plate-forme de communication

Du fait de la gestion centralisée, la plate-forme unique de communication a une capacité de stockage et de traitement plus importante,
qui permet la compatibilité et l'adaptation avec des techniques diverses et évolutives.

La capacité de traitement centralisée permet également une gestion plus complexe, avec un traitement plus élaboré en fonction du contenu des messages reçus et de paramètres plus nombreux.

Ledit traitement est adapté aux différents équipements à gérer. La souplesse dans la définition dudit traitement permet la prise en compte de nombreuses possibilités de gestion des informations reçues ou transmises.

L'invention a également pour objet un procédé de gestion à distance d'un ensemble d'équipements par l'intermédiaire d'au moins un réseau de télécommunications, caractérisé en ce que ledit procédé comporte les étapes consistant à : - paramétrer au moins une plate-forme de communication pour mettre en mémoire la gestion d'au moins un équipement ; - définir au moins un traitement d'au moins un message en provenance dudit équipement ; - stocker par ladite plate-forme de communication ledit traitement composé d'au moins une règle et au moins une action ; - recevoir par ladite plate-forme de communication au moins un message en provenance dudit équipement ; - appliquer au moins une règle associée audit traitement stocké par ladite plate-forme de communication en fonction dudit message en provenance dudit équipement ; - établir une liaison avec au moins un dispositif, installé dans ledit réseau de télécommunications, pour requérir au moins une donnée destinée à appliquer une règle associée audit traitement ; - générer au moins une action associée audit traitement stocké par ladite plate-forme de communication en fonction dudit message en provenance dudit équipement ; - établir une liaison avec au moins un dispositif installé dans ledit réseau de télécommunications et requis pour générer une action associée audit traitement.

En plus de la transmission de messages avec les équipements, la plate-forme de communication dialogue avec les différents réseaux de télécommunications sur lesquels sont raccordés lesdits équipements ou avec tout autre réseau de télécommunications.

La plate-forme de communication sert d'interface avec tout dispositif existant, installé dans lesdits réseaux de télécommunications. Ces dispositifs peuvent être notamment un serveur de sécurité, un serveur de localisation, un dispositif d'authentification, un serveur de paiement à distance, etc... Lesdits dispositifs sont sollicités lorsque le traitement stocké dans ladite plate-forme de communication le nécessite.

Ladite plate-forme de communication est gérée par l'opérateur offrant le service de gestion à distance. De ce fait, l'opérateur peut choisir de réaliser une facturation adaptée à l'abonnement souscrit, ce qui diminue les coûts pour le gestionnaire des équipements.

Selon l'invention, ledit traitement d'un message, stocké dans ladite plate-forme de communication, est paramétré par ledit abonné à partir d'au moins un serveur d'accès par la sélection d'au moins une règle et d'au moins une action, prédéfinies par ladite plate-forme de communication.

La plate-forme de communication sert également d'interface avec tout serveur d'accès permettant à un abonné, gestionnaire d'au moins un desdits équipements, d'indiquer le traitement à réaliser pour ledit équipement.

L'entrée des informations sur ledit serveur d'accès est facilitée pour l'abonné. De cette façon, ledit abonné ne rencontre pas de difficulté pour créer une liste de règles et d'actions. L'abonné pourra définir un traitement complexe en requérant un nombre important de paramètres, sans avoir de connaissances approfondies sur le fonctionnement de la plate-forme ou celui dudit système de gestion à distance.

De plus, cette simplicité d'utilisation permet la modification rapide d'un traitement ou bien l'ajout en temps réel de nouveaux équipements à gérer. Par conséquent, l'évolution dudit système de gestion à distance est plus aisée.

Ladite plate-forme de communication reçoit les paramètres entrés par l'abonné et nécessaires pour la gestion à distance. La prise en compte desdits paramètres par la plate-forme de communication est accélérée.

Conformément à l'invention, au moins une action commande la transmission d'au moins une donnée par ladite plate-forme de communication vers ledit équipement.

En plus des messages reçus, la plate-forme de communication génère des messages vers lesdits équipements lorsque cette action est prévue lors d'un traitement.

Par conséquent, la gestion à distance est interactive vis-à-vis desdits équipements. Lesdits équipements transmettent d'eux-mêmes vers ladite plate-forme de communication. La plate-forme de communication peut également solliciter lesdits équipements.

Conformément à l'invention, ladite plate-forme de communication établit une liaison avec au moins un serveur de localisation installé dans au moins un réseau de l'ensemble des réseaux de télécommunications et requis pour connaître la position géographique indifféremment dudit équipement ou d'au moins un dispositif, installé dans au moins un réseau de l'ensemble des réseaux de télécommunications.

La plate-forme de communication est en relation avec différents serveurs, mis à disposition par l'opérateur du réseau. Ladite plate-forme de communication, gérée par ledit opérateur, accède aux dits serveurs en générant un minimum de trafic.

Ces dits serveurs, tel qu'un serveur d'authentification, ont accès à des informations destinées au fonctionnement dudit réseau ou bien destinées à l'opérateur. De ce fait, lorsque cette fonction est utile pour le traitement, ladite plate-forme de communication entre en contact avec un serveur de localisation dudit équipement.

La description qui va suivre en regard des dessins annexés, donnés à titre d'exemple non limitatif, fera bien comprendre en quoi consiste l'invention, comment elle peut être réalisée et d'autres caractéristiques de l'invention en ressortiront.

La figure 1 est un schéma de l'architecture générale d'un système de gestion à distance d'équipements, conforme à l'invention.

La figure 2 est une représentation d'un exemple de traitement.

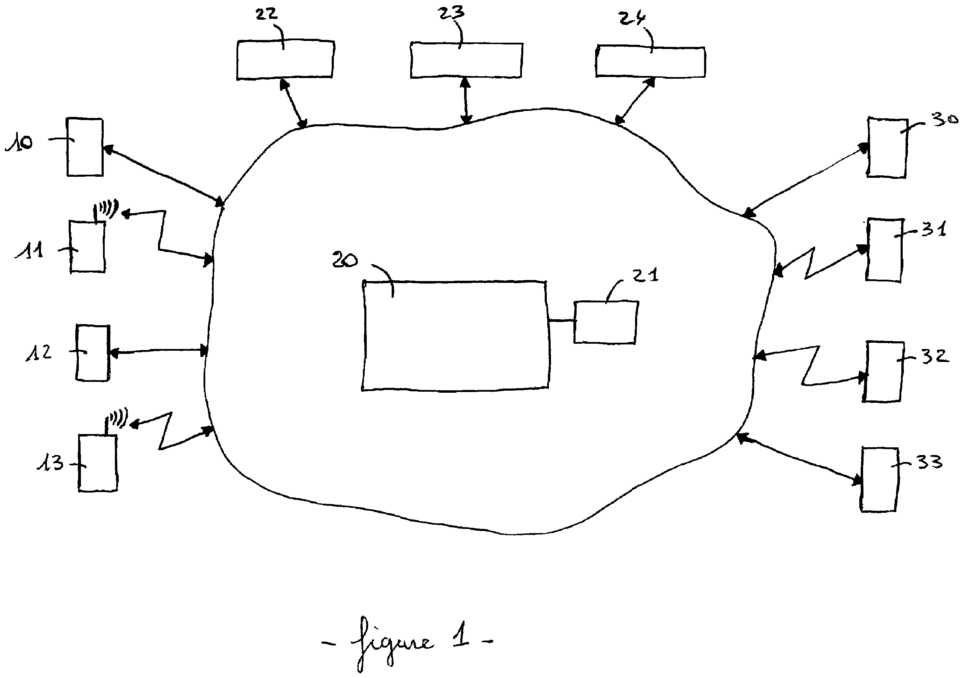

Le système de gestion à distance, présenté dans la figure 1, concerne au moins un équipement 10, 11, 12, 13, muni d'un module de communication qui permet le raccordement et la transmission de messages avec au moins un réseau de télécommunications.

Ledit équipement communicant 10, 11, 12, 13 est de toute nature, tel qu'un compteur électrique, un véhicule automobile, une cabine d'ascenseur, un panneau d'affichage, un mécanisme d'arrosage, un distributeur automatique d'articles, un ordinateur individuel ou PC (Personnel Computer) ou tout autre terminal communicant, etc...

Ledit réseau de télécommunications est de toute technologie, tel qu'un réseau fixe de télécommunications ou un réseau cellulaire pour les mobiles, par exemple un réseau de transmission IP (Internet Protocol), un réseau de transport X25 (transmission à commutation de paquets), un réseau mobile GSM (Global System for Mobile communications, soit système global pour les communications mobiles), un réseau mobile DECT (Digital Enhanced Cordless Telecommunication, soit système de télécommunications numériques améliorées sans cordon), un réseau mobile GPRS (General Packet Radio Service, soit service général de radiocommunication en mode paquet), etc...

Par exemple, ledit module de communication, incorporé dans ledit équipement 10, 11, 12, 13 reçoit au moins une information en provenance d'au moins un capteur, comme une grandeur physique à mesurer.

Ledit capteur peut être paramétré pour transmettre au moment d'un défaut ou bien périodiquement pour contrôle.

Si nécessaire, de manière à reconnaître l'équipement concerné, le module de communication ajoute au moins un identifiant à l'information en provenance dudit capteur. Ledit module de communication dudit équipement 10, 11, 12, 13 transmet au moins un message vers une plate-forme de communication 20 par l'intermédiaire dudit réseau de télécommunications.

Ladite plate-forme de communication 20 est située dans un réseau de communication, tel qu'un réseau fixe de télécommunication, un réseau cellulaire pour les mobiles, le réseau Internet, un réseau de communication d'entreprise, etc... Ledit réseau de communication peut entrer en relation avec l'ensemble des réseaux de télécommunications, sur lesquels lesdits équipements sont raccordés.

La plate-forme de communication 20 est équipée d'au moins une interface d'accès, adaptée pour le raccordement avec ledit réseau de communication sur lequel ledit équipement 10, 11, 12, 13 est raccordé, et d'au moins un module de communication, adapté à la transmission d'au moins un message avec au moins un équipement 10, 11, 12, 13 de l'ensemble des équipements. De cette façon, ladite plate-forme de communication 20 est commune à l'ensemble des équipements 10, 11, 12, 13 à gérer et s'adapte aux différentes technologies de transmission desdits équipements.

Chaque interface d'accès et chaque module de communication de la plate-forme de communication 20 dialogue avec un module de communication d'au moins un équipement communicant 10, 11, 12, 13.

Ladite plate-forme de communication 20 est équipée pour transmettre des messages de toute nature, aussi bien en fixe par exemple en provenance d'un réseau "RTC" (Réseau téléphonique Commuté ou PSTN), d'un réseau "RNIS" (Réseau numérique à intégration de services ou ISDN), d'un réseau de transport "X25" (transmission à commutation de paquets), d'un réseau Internet, ..., ainsi qu'en mobile par exemple des données de type "CSD" (Circuit Switched Data, soit données en mode circuit), des données de type "USSD" (Unstructured Supplementary Services Data, soit données pour services supplémentaires non structurés), des messages "SMS" (Short Message Service, soit service des messages courts), etc...

Un gestionnaire d'équipements, abonné à la gestion centralisée, se raccorde à ladite plate-forme de communication 20 pour commander la gestion d'au moins un équipement 10, 11, 12, 13. Un abonné se connecte à un serveur d'accès 30, 31, tel qu'un serveur web sur un site internet ou sur un réseau privé, par l'intermédiaire duquel il identifie ledit équipement 10, 11, 12, 13 à gérer.

Ensuite, ledit abonné entre les paramètres nécessaires à ladite plate-forme de communication 20, de manière à savoir analyser les messages en provenance dudit équipement 10, 11, 12, 13, ainsi qu'à connaître les actions à générer par ladite plate-forme de communication 20.

Lesdits paramètres constituent le traitement à réaliser par ladite plate-forme de communication 20 concernant ledit équipement 10, 11, 12, 13. Un même traitement peut être appliqué pour plusieurs équipements identifiés.

Ledit traitement se compose d'une liste d'au moins une règle à appliquer et d'au moins une action à générer par ladite plate-forme de communication 20.

Si l'abonné possède les connaissances requises, il peut définir lui-même une liste de règles et d'actions correspondant au traitement à réaliser, par exemple à partir d'un programme éditeur de texte tel que "Notepad" ou de type "Word" ou autre. La capacité de traitement centralisée par la plate-forme de communication 20 permet un traitement élaboré en fonction de nombreux paramètres adaptés à chacun des équipements 10, 11, 12, 13 à gérer.

Sinon, l'abonné peut sélectionner au moins une règle et au moins une action, parmi des règles et des actions prédéfinies dans la plate-forme de communication 20. De cette façon, l'entrée des paramètres est facilitée. La création ou la modification de la gestion d'un équipement 10, 11, 12, 13 est simple et rapide.

A partir de la liste de règles et d'actions paramétrées, la plate-forme de communication 20 va automatiquement transcrire ladite liste en un script ou scénario, qui est le découpage technique des fonctions de communication et des interventions à réaliser pour mettre en œuvre les règles et les actions définies.

Par exemple, si l'action définie est de contacter le dépanneur le plus proche de l'équipement 10, 11, 12, 13, la plate-forme de communication 20 va d'abord inscrire dans le script de lire dans une table l'identification de la cellule où se trouve l'équipement 10, 11, 12, 13 en panne. Ensuite, la plate-forme de communication 20 va entrer en contact avec un serveur de localisation 24 du réseau de télécommunications pour rechercher au moins un terminal mobile présent dans une ou plusieurs cellules les plus proches de la cellule dans laquelle se trouve l'équipement 10, 11, 12, 13. Enfin, la plate-forme de communication 20 va établir la communication avec le terminal mobile sélectionné après la recherche.

Par défaut et pour des raisons de sécurité, si un abonné ne définit pas une liste de règles et d'actions après avoir identifié au moins un équipement 10, 11, 12, 13 à gérer, la plate-forme de communication 20 réalise une règle prédéfinie. Par exemple, par défaut, la plate-forme de communication 20 appelle l'abonné qui a identifié ledit équipement 10, 11, 12, 13.

La plate-forme de communication 20 peut être paramétrée pour solliciter elle-même ledit équipement 10, 11, 12, 13. Cette action peut être prévue de façon périodique ou bien à une date et à une heure précise, dans le but de vérification régulière des équipements. Cette vérification peut inclure une combinaison de conditions sur le fonctionnement du module de communication dudit équipement 10, 11, 12, 13 ou sur la localisation dudit équipement 10, 11, 12, 13 lorsqu'il est mobile ou bien toute autre information.

La gestion à distance par la plate-forme de communication 20 est interactive vis-à-vis desdits équipements 10, 11, 12, 13. Ladite plate-forme de communication 20 reçoit un message en provenance d'un équipement 10, 11, 12, 13 ou bien sollicite ledit équipement, soit pour obtenir une information notamment fournie par un capteur, soit pour commander elle-même la transmission de données utilisées par ledit équipement 10, 11, 12, 13.

La plate-forme de communication 20 peut également être paramétrée pour solliciter au moins un dispositif 22, 23, 24 installé dans un réseau de télécommunications. Entre autres, cette action peut être prévue pour le traitement associé à un équipement. Ces dispositifs peuvent être notamment un serveur de sécurité, un dispositif d'authentification, un serveur de paiement à distance, un dispositif de notification d'un avis, etc...

Dans un réseau cellulaire pour les mobiles, ledit dispositif est par exemple un serveur de localisation 24, permettant de connaître soit la localisation de l'équipement lui-même 10, 11, 12, 13 lorsqu'il est mobile, soit la localisation d'un intervenant le plus proche d'un équipement 10, 11, 12, 13.

La liste des règles et des actions à réaliser étant établie, la plate-forme de communication 20 teste automatiquement ledit traitement pour vérifier la cohérence de ladite liste et pour vérifier la mise en œuvre sans problème du script ou scénario associé. Si la succession des fonctions et des interventions n'est pas réalisable, la plate-forme de communication 20 émet un message d'erreur vers l'abonné.

Une fois que l'équipement 10, 11, 12, 13 à gérer est identifié et que le traitement à réaliser concernant ledit équipement est défini, la plate-forme de communication 20 met en mémoire lesdites informations, notamment dans une base de données 21. Ladite base de données 21 peut être physiquement incluse ou non dans ladite plate-forme de communication 20.

Lorsque la plate-forme de communication 20 reçoit par exemple un message en provenance d'un équipement 10, 11, 12, 13 ou bien à un événement d'horloge défini (date et heure prévues), ladite plate-forme de communication 20 recherche le script associé à la liste stockée des actions et de règles correspondant audit équipement 10, 11, 12, 13.

La plate-forme de communication 20 commande l'exécution du script associé aux règles et aux actions mises en mémoire. Cette exécution peut donner lieu à une analyse, par exemple par rapport à l'existence ou non d'une information en provenance dudit équipement. Elle peut donner lieu à la transmission d'informations, par exemple vers un second équipement 10, 11, 12, 13. Le contenu du message reçu par ladite plate-forme de communication 20 peut également être enrichit par des informations, par exemple des informations extraites d'un annuaire téléphonique, en provenance d'un dispositif 22, 23, 24 du réseau de télécommunications.

Les résultats obtenus en fin de traitement sont mis en mémoire, notamment dans ladite base de données 21 associée à la plate-forme de communication 20.

La sauvegarde des traitements exécutés donne soit la possibilité de réaliser des statistiques sur la gestion réalisée, soit la possibilité de contrôler en cas de demande d'un abonné ou bien d'anomalie constatée.

Le traitement stocké peut également prévoir la mise en mémoire du résultat dudit traitement, par exemple lors du relevé de la consommation sur un distributeur d'articles pour permettre à l'abonné de préparer un réassortiment des articles consommés ou pour la facturation desdits articles consommés auprès d'un distributeur des articles distribués ou bien la transmission de la consommation vers un serveur de paiement à distance.

Cette sauvegarde permet également de gérer la facturation vers un abonné du service de gestion centralisée, entre autres lorsque ladite facturation est fonction du nombre d'équipements 10, 11, 12, 13 qui sollicitent la plate-forme de communication 20. Dans cet exemple particulier, le nombre de communications établit par lesdits équipements et par la plate-forme de communication 20 peuvent faire l'objet d'une facturation globale en fonction de l'abonnement souscrit par le gestionnaire des équipements. Un modem de type GSM (Global System for Mobile communications, soit système global pour les communications mobiles), avec une carte SIM (Subscriber Identification Module, soit module d'identification d'abonné), peut être installé dans le module de communication des équipements 10, 11, 12, 13 de manière à ne permettre la transmission que vers la plate-forme de communication 20 et à vérifier l'origine des appels par le réseau de télécommunication pour éviter la facturation des communications émanant de la dite carte SIM repérée par son identifiant soit MSISDN (Mobile Subscriber ISDN, soit abonné mobile ISDN).

En fonction du traitement prévu, un abonné peut uniquement souhaiter accéder aux résultats obtenus en fin de traitement, entre autres en interrogeant la plate-forme de communication 20 sur l'état des relevés réalisés sur des équipements 10, 11, 12, 13, telle que la mesure de la température dans des bâtiments.

Selon le traitement stocké, ladite plate-forme de communication 20 envoie un message d'alerte vers un système d'informations 32, 33 (ou SI) défini par l'abonné. Ledit système d'informations 32, 33 (ou SI) est par exemple l'adresse d'une boite aux lettres dans une messagerie électronique ou l'adresse d'un site web dans un réseau privé d'entreprise ou bien l'adresse d'un ordinateur individuel ou PC (Personal Computer) ou l'adresse de tout autre équipement communicant.

Un ou plusieurs systèmes d'informations 32, 33 (ou SI) peuvent être définis en fonction du gestionnaire dudit équipement ou bien en fonction du domaine d'activité de l'équipement ou bien en fonction de la zone géographique dudit équipement 10, 11, 12, 13.

Pour un autre traitement particulier, la plate-forme de communication 20 doit entrer en contact avec un dépanneur spécialisé pour le type d'équipements en dérangement ou avec une personne d'astreinte.

Selon les traitements définis, le contact avec un système d'informations 32, 33 (ou SI) n'est pas indispensable. La plate-forme de communication 20 est autonome et peut elle-même sauvegarder les listes de règles et d'actions, ainsi que les résultats en fin de traitement. Ladite plate-forme de communication 20 peut solliciter tout dispositif ou tout interlocuteur ou tout terminal communicant tel que paramétré par l'abonné audit service de gestion centralisée. Ledit abonné accède aux informations, qui lui sont nécessaires, par l'intermédiaire d'un serveur d'accès 30, 31, matériel utilisé également pour identifier les équipements 10, 11, 12, 13 à gérer et paramétrer leur traitement.

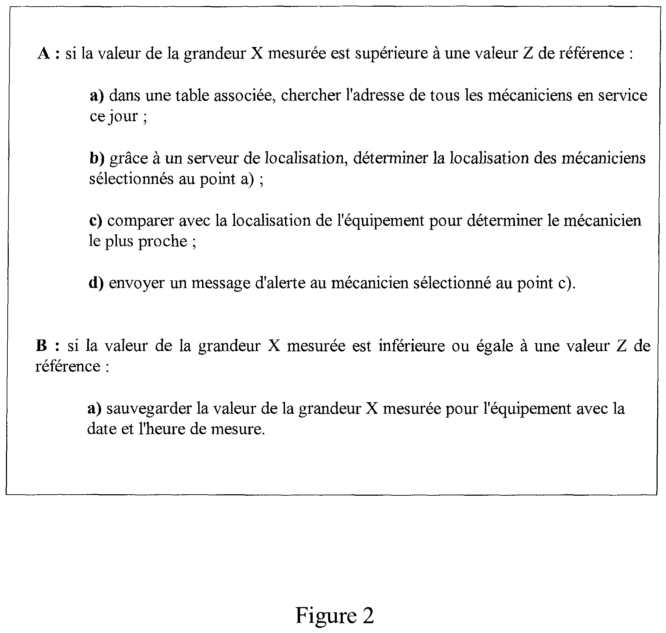

De manière à faciliter la compréhension, la figure 2 présente une représentation d'un exemple de traitement. Le déroulement dudit traitement se fait en fonction des données reçues en provenance d'un équipement 10, 11, 12, 13. Lesdites données de l'équipement peuvent être de toute nature, telle que du texte, une image, un fichier vidéo, un code d'authentification, la localisation de l'équipement, etc...

Les données reçues concernent la valeur d'une grandeur X relevée par un capteur, installé sur ledit équipement 10, 11, 12, 13. La plate-forme de communication 20 commande l'exécution successive des règles et des actions mises en mémoire, en comparant la valeur de la grandeur X avec une valeur Z de référence. La plate-forme de communication 20 vérifie la condition mentionnée, à savoir si la grandeur X est supérieure (condition A) ou non (condition B) à la valeur Z.

Si la condition A du tableau de la figure 2 est vérifiée, la plate-forme de communication 20 va chercher une table associée au traitement de ladite grandeur X transmise. Dans ladite table, la plate-forme de communication 20 sélectionne l'adresse des mécaniciens en service le jour de réception de ladite grandeur X. Grâce à un serveur de localisation 24 du réseau de télécommunications, la localisation géographique des mécaniciens sélectionnés dans ladite table est réalisée. En comparant avec la situation géographique de l'équipement 10, 11, 12, 13, le mécanicien le plus proche dudit équipement est déterminé. Un message d'alarme concernant ledit équipement 10, 11, 12, 13 est alors transmis par exemple sur le terminal mobile dudit mécanicien sélectionné.

Si la condition B dudit tableau est vérifiée, la plate-forme de communication 20 met en mémoire la valeur de ladite grandeur X mesurée pour ledit équipement 10, 11, 12, 13 avec la date et l'heure de la mesure.

Le traitement des données transmises peut être différent en fonction du moment de la mesure, comme dans le cas d'un relevé de température dans un bâtiment avec une valeur de température pour le jour et une autre pour la nuit.

Les traitements mis en mémoire par la plate-forme de communication 20 concernent différents type de gestion à distance d'équipements 10, 11, 12, 13. Les différents modes de réalisation suivants sont donnés à titre d'exemples non limitatifs de manière à présenter des mises en oeuvre particulières de l'invention. Bien entendu, la présente invention n'est pas limitée aux modes de réalisation décrits à tire d'exemple.

Un autre mode de réalisation, un gestionnaire d'équipements 10, 11, 12, 13 possède des emplacements publicitaires affichant des contenus, tels que du texte, des images ou des séquences vidéo. Le gestionnaire désire planifier les informations qui vont être affichées. Par exemple, une fois par mois, ledit gestionnaire transmet vers la plate-forme de communication 20 les contenus à afficher, ainsi que les dates de changement des affichages. Tout au long du mois, la plate-forme de communication 20 entre en contact individuellement avec les différents emplacements publicitaires pour commander le changement des contenus aux dates convenues. Les pannes des emplacements publicitaires sont détectées et enregistrées par la plate-forme de communication 20. A la fin du mois, ces informations sont transmises au gestionnaire et les emplacements facturés aux clients finaux ne concernent que les équipements effectivement en service.

Dans cet exemple, les paramétrages sont multiples, différents équipements avec différents contenus pour chacun d'eux en fonction de la date de diffusion. La planification du mois est réalisée en une seule fois pour tous les équipements gérés. De plus, du fait de la gestion à distance, la facturation tiendra compte du fonctionnement ou non desdits équipements 10, 11, 12, 13, donc de la diffusion effective des affichages.

Selon un mode de réalisation particulier, un loueur de véhicules automobiles 10, 11, 12, 13 désire superviser sa flotte de voiture. La première fois, le loueur met en mémoire dans la plate-forme de communication 20 les zones géographiques autorisées pour chaque type de contrat de location, ainsi que le type de contrat d'assistance en cas de panne. Les véhicules automobiles sont équipés d'un modem de type GSM (Global System for Mobile communications, soit système global pour les communications mobiles) de manière à pouvoir les localiser grâce à un réseau cellulaire pour les mobiles. A chaque début de location, l'indication du type de contrat souscrit est transmise par le loueur à la plate-forme de communication 20. En cas de sortie de la zone autorisée, une alerte est transmise au loueur par ladite plate-forme de communication 20. En cas de panne détectée par des capteurs ou de perte de connexion avec le réseau GSM détectée par la plate-forme de communication 20, une alerte est transmise en fonction du contrat d'assistance souscrit. Dans tous les cas, un historique des pannes est stocké sur la plate-forme de communication 20. En cas de période de non-location d'un véhicule, le gestionnaire prévient la plate-forme de communication 20 et dispose ainsi d'une réduction de ses frais d'abonnement sur le véhicule. Dans le cas de non-location, la plate-forme de communication 20 peut éventuellement vérifier une fois par jour que le véhicule n'est pas situé hors du parking.

Dans cet exemple, la localisation des véhicules est réalisée par le réseau de télécommunications. Des messages d'alerte sont émis en cas de panne ou en cas de sortie d'un véhicule non autorisé.

Dans un autre mode de réalisation, un gestionnaire de compteurs d'eau 10, 11, 12, 13 veut effectuer la relève à distance de ses compteurs, repartis dans des habitations variées. Il définit au niveau de la plate-forme de communication 20 la fréquence à laquelle il veut obtenir les informations de relevé. La plate-forme de communication 20 va interroger les compteurs d'eau la nuit, ce qui permet au gestionnaire de bénéficier des tarifs de nuit sur ses communications. Le gestionnaire peut accéder aux résultats de jour, notamment à l'aide d'une connexion Internet. La plate-forme de communication 20 envoi un message d'alerte au technicien de maintenance le plus proche, grâce à la localisation, dans le cas de panne où un des équipements 10, 11, 12, 13 n'a pu être relevé.

Dans cet exemple, la plate-forme de communication 20 utilise le trafic nocturne hors activité du personnel du gestionnaire. Ladite plate-forme de communication 20 stocke les informations de relevé auxquelles le gestionnaire peut accéder par un serveur d'accès 30, 31. Les alertes transmises sont dépendantes de la localisation du technicien de maintenance.

Selon un mode de réalisation différent, un propriétaire veut éviter l'occupation de son appartement entre deux périodes de location. Ledit appartement 10, 11, 12, 13 ne dispose plus de ligne téléphonique ni d'alimentation en électricité dans cette période. Le propriétaire place alors au milieu de son appartement un équipement de téléphone avec un détecteur de mouvement autonome sur batterie, fourni par exemple par l'opérateur du système de gestion à distance. Le propriétaire indique sur la plate-forme de communication 20 la non-occupation de l'appartement. En cas de détection de mouvement, une communication est établie entre la plate-forme de communication 20 et le téléphone mobile de l'appartement. La plate-forme de communication 20 attend un code d'authentification prédéfini pour annuler l'alarme. Si ledit code n'est pas fourni dans des délais raisonnables, la plate-forme de communication 20 contacte le propriétaire, afin qu'il puisse prendre les mesures nécessaires. Grâce à cette vérification, celui-ci n'est pas sollicité pour de fausses alertes, entre autres en cas de visite de l'appartement organisée par une agence immobilière.

Dans cet exemple, la plate-forme de communication 20 assure l'interaction entre l'équipement et le propriétaire. Le traitement prévoit la prise en compte du résultat d'une identification avant de transmettre une alerte vers le propriétaire.

## Revendications

1. Plateforme de communication (20) pour gérer à distance un ensemble d'équipements (10, 11, 12, 13) par l'intermédiaire d'au moins un réseau de télécommunications, la plateforme de communication comprenant des moyens pour :
- obtenir au moins un traitement composé d'une liste d'au moins une règle et d'au moins une action pour au moins un équipement dudit ensemble identifié par un abonné d'un serveur d'accès (30, 31) apte à communiquer avec ladite plateforme (20) de communication, un traitement étant paramétré par ledit abonné du serveur d'accès et au moins un dit traitement comprenant une sollicitation d'au moins un serveur distant installé dans ledit réseau de télécommunications,
- stocker ledit au moins un traitement,
- recevoir au moins un message en provenance dudit équipement (10, 11, 12, 13),
- appliquer au moins une règle dudit traitement stocké pour ledit équipement par ladite plate-forme (20) de communication en fonction dudit message en provenance dudit équipement (10, 11, 12, 13),
- établir une liaison avec au moins un serveur distant (22, 23, 24), pour requérir au moins une donnée destinée à appliquer une règle associée audit traitement et/ou pour générer une action associée audit traitement,
- générer par ladite plateforme au moins une action associée audit traitement stocké par ladite plate-forme (20) de communication en fonction dudit message en provenance dudit équipement (10, 11, 12, 13),
- enregistrer par ladite plateforme au moins un résultat obtenu en fin dudit traitement, et
- fournir par ladite plateforme à un abonné du serveur d'accès, un accès audit au moins un résultat.

2. Plateforme de communication (20) selon la revendication 1 comprenant des moyens permettant qu'au moins une règle et/ou une action dudit au moins un traitement sont sélectionnées par un abonné parmi des règles et actions prédéfinies dans ladite plateforme (20) de communication.

3. Plateforme de communication (20) selon la revendication 1 ou 2, comprenant des moyens pour transcrire ladite liste en un script et à exécuter ledit script lors du traitement dudit message reçu.

4. Plateforme de communication (20) selon la revendication 3, comprenant des moyens pour vérifier ledit script.

5. Plateforme de communication (20) selon l'une des revendications 1 à 4, comprenant des moyens pour connecter la plateforme avec au moins un dispositif (22, 23, 24) installé dans un réseau de télécommunications.

6. Plateforme de communication (20) selon l'une quelconque des revendications 1 à 5, comprenant des moyens pour envoyer au moins un message d'alerte vers au moins un équipement dudit réseau de télécommunications.

7. Plateforme de communication (20) selon l'une quelconque des revendications 1 à 6, **caractérisé en ce qu'**au moins une action de ladite liste commande la transmission d'au moins une donnée par ladite plate-forme (20) de communication vers ledit équipement (10, 11, 12, 13).

8. Plateforme de communication (20) selon l'une quelconque des revendications 1 à 7, comprenant au moins un module de communication adapté à la transmission d'au moins un message avec au moins un équipement de l'ensemble des équipements (10, 11, 12, 13).

9. Plateforme de communication (20) selon l'une quelconque des revendications 1 à 8, **caractérisé en ce que** ladite plate-forme (20) de communication établit une liaison avec au moins un serveur de localisation (24) installé dans au moins un réseau de l'ensemble des réseaux de télécommunications et requis pour connaître la position géographique indifféremment dudit équipement (10, 11, 12, 13) ou d'au moins un dispositif (22, 23) installé dans au moins un réseau de l'ensemble des réseaux de télécommunications.

10. Procédé de gestion à distance d'un ensemble d'équipements (10, 11, 12, 13) par l'intermédiaire d'au moins un réseau de télécommunications, ledit procédé comportant les étapes suivantes mises en œuvre par une plateforme de communication (20) :
- obtention d'au moins un traitement composé d'une liste d'au moins une règle et d'au moins une action pour au moins un équipement dudit ensemble identifié par un abonné d'un serveur d'accès (30, 31) apte à communiquer avec ladite plateforme (20) de communication, un traitement étant paramétré par ledit abonné du serveur d'accès et au moins un dit traitement comprenant une sollicitation d'au moins un serveur distant _installé dans ledit réseau de télécommunications,
- stocker ledit au moins un traitement,
- recevoir au moins un message en provenance dudit équipement (10, 11, 12, 13),
- appliquer au moins une règle dudit traitement stocké pour ledit équipement par ladite plate-forme (20) de communication en fonction dudit message en provenance dudit équipement (10, 11, 12, 13),
- établir une liaison avec au moins un serveur distant (22, 23, 24), pour requérir au moins une donnée destinée à appliquer une règle associée audit traitement et/ou pour générer une action associée audit traitement,
- générer au moins une action associée audit traitement stocké par ladite plate-forme (20) de communication en fonction dudit message en provenance dudit équipement (10, 11, 12, 13),
- enregistrer au moins un résultat obtenu en fin dudit traitement, et
- fournir par ladite plateforme à un abonné du serveur d'accès, un accès audit au moins un résultat.

11. Procédé de gestion à distance selon la revendication 10, dans lequel un dit serveur distant est un serveur de sécurité, un serveur de paiement ou un serveur de localisation.

12. Procédé de gestion à distance selon la revendication 10, dans lequel le serveur distant est un serveur de localisation permettant d'obtenir la localisation dudit équipement.

## Patentansprüche

1. Kommunikationsplattform (20) zum Fernverwalten eines Satzes Geräte (10, 11, 12, 13) mittels mindestens eines Telekommunikationsnetzwerks, wobei die Kommunikationsplattform Mittel für Folgendes beinhaltet:
- Erhalten mindestens einer Verarbeitung, die aus einer Liste mit mindestens einer Regel und mindestens einer Aktion für mindestens ein Gerät des Satzes besteht, das durch einen Teilnehmer eines Zugangsservers (30, 31), der dazu geeignet ist, mit der Kommunikationsplattform (20) zu kommunizieren, identifiziert wird, wobei eine Verarbeitung von dem Teilnehmer des Zugangsservers parametriert wird und wobei mindestens eine Verarbeitung eine Anfrage von mindestens einem in dem Telekommunikationsnetzwerk installierten Fernserver beinhaltet,
- Speichern der mindestens einen Verarbeitung,
- Empfangen mindestens einer Nachricht von dem Gerät (10, 11, 12, 13),
- Anwenden mindestens einer Regel der Verarbeitung, die für das Gerät durch die Kommunikationsplattform (20) gespeichert wird, in Abhängigkeit von der Nachricht von dem Gerät (10, 11, 12, 13),
- Herstellen einer Verbindung zu mindestens einem Fernserver (22, 23, 24), um mindestens ein Datenelement zum Anwenden einer mit der Verarbeitung assoziierten Regel und/oder zum Erzeugen einer mit der Verarbeitung assoziierten Aktion anzufordern,
- Erzeugen, durch die Plattform, mindestens einer Aktion, die mit der durch die Kommunikationsplattform (20) gespeicherten Verarbeitung assoziiert ist, in Abhängigkeit von der Nachricht von dem Gerät (10, 11, 12, 13),
- Aufzeichnen, durch die Plattform, mindestens eines Ergebnisses, das am Ende der Verarbeitung erhalten wird, und
- Bereitstellen, durch die Plattform, eines Zugangs zu dem mindestens einen Ergebnis für einen Teilnehmer des Zugangsservers.

2. Kommunikationsplattform (20) nach Anspruch 1, die Mittel beinhaltet, die es ermöglichen, dass mindestens eine Regel und/oder eine Aktion der mindestens einen Verarbeitung von einem Teilnehmer aus den in der Kommunikationsplattform (20) vordefinierten Regeln und Aktionen ausgewählt wird.

3. Kommunikationsplattform (20) nach Anspruch 1 oder 2, die Mittel beinhaltet, um die Liste in ein Skript umzuschreiben und das Skript während der Verarbeitung der empfangenen Nachricht auszuführen.

4. Kommunikationsplattform (20) nach Anspruch 3, die Mittel beinhaltet, um das Skript zu überprüfen.

5. Kommunikationsplattform (20) nach einem der Ansprüche 1 bis 4, die Mittel beinhaltet, um die Plattform mit mindestens einer Vorrichtung (22, 23, 24), die in einem Telekommunikationsnetzwerk installiert ist, zu verbinden.

6. Kommunikationsplattform (20) nach einem der Ansprüche 1 bis 5, die Mittel beinhaltet, um mindestens eine Warnnachricht an mindestens ein Gerät des Telekommunikationsnetzwerks zu senden.

7. Kommunikationsplattform (20) nach einem der Ansprüche 1 bis 6, **dadurch gekennzeichnet, dass** mindestens eine Aktion der Liste die Übertragung mindestens eines Datenelements durch die Kommunikationsplattform (20) an das Gerät (10, 11, 12, 13) steuert.

8. Kommunikationsplattform (20) nach einem der Ansprüche 1 bis 7, die mindestens ein Kommunikationsmodul beinhaltet, das für die Übertragung mindestens einer Nachricht mit mindestens einem Gerät des Satzes Geräte (10, 11, 12, 13) ausgelegt ist.

9. Kommunikationsplattform (20) nach einem der Ansprüche 1 bis 8, **dadurch gekennzeichnet, dass** die Kommunikationsplattform (20) eine Verbindung zu mindestens einem Lokalisierungsserver (24) herstellt, der in mindestens einem Netzwerk des Satzes Telekommunikationsnetzwerke installiert und erforderlich ist, um die geographische Position entweder von dem Gerät (10, 11, 12, 13) oder von mindestens einer Vorrichtung (22, 23), die in mindestens einem Netzwerk des Satzes Telekommunikationsnetzwerte installiert ist, zu kennen.

10. Verfahren zum Fernverwalten eines Satzes Geräte (10, 11, 12, 13) mittels mindestens eines Telekommunikationsnetzwerks, wobei das Verfahren die folgenden Schritte beinhaltet, die von einer Kommunikationsplattform (20) durchgeführt werden:
- Erhalten mindestens einer Verarbeitung, die aus einer Liste mit mindestens einer Regel und mindestens einer Aktion für mindestens ein Gerät des Satzes besteht, das durch einen Teilnehmer eines Zugangsservers (30, 31), der dazu geeignet ist, mit der Kommunikationsplattform (20) zu kommunizieren, identifiziert wird, wobei eine Verarbeitung von dem Teilnehmer des Zugangsservers parametriert wird und wobei mindestens eine Verarbeitung eine Anfrage von mindestens einem in dem Telekommunikationsnetzwerk installierten Fernserver beinhaltet,
- Speichern der mindestens einen Verarbeitung,
- Empfangen mindestens einer Nachricht von dem Gerät (10, 11, 12, 13),
- Anwenden mindestens einer Regel der Verarbeitung, die für das Gerät durch die Kommunikationsplattform (20) gespeichert wird, in Abhängigkeit von der Nachricht von dem Gerät (10, 11, 12, 13),
- Herstellen einer Verbindung zu mindestens einem Fernserver (22, 23, 24), um mindestens ein Datenelement zum Anwenden einer mit der Verarbeitung assoziierten Regel und/oder zum Erzeugen einer mit der Verarbeitung assoziierten Aktion anzufordern,
- Erzeugen mindestens einer Aktion, die mit der durch die Kommunikationsplattform (20) gespeicherten Verarbeitung assoziiert ist, in Abhängigkeit von der Nachricht von dem Gerät (10, 11, 12, 13),
- Aufzeichnen mindestens eines Ergebnisses, das am Ende der Verarbeitung erhalten wird, und
- Bereitstellen, durch die Plattform, eines Zugangs zu dem mindestens einen Ergebnis für einen Teilnehmer des Zugangsservers.

11. Verfahren zum Fernverwalten nach Anspruch 10, wobei ein Fernserver ein Sicherheitsserver, ein Zahlungsserver oder ein Lokalisierungsserver ist.

12. Verfahren zum Fernverwalten nach Anspruch 10, wobei der Fernserver ein Lokalisierungsserver ist, der es ermöglicht, die Lokalisierung des Geräts zu erhalten.

## Claims

1. Communication platform (20) for remotely managing a set of equipments (10, 11, 12, 13) by means of at least one telecommunication network, the communication platform comprising means for:
- obtaining at least one processing operation consisting of a list containing at least one rule and at least one action for at least one equipment of said set identified by a subscriber to an access server (30, 31) capable of communicating with said communication platform (20), a processing operation being configured by said subscriber to the access server, and at least one said processing operation comprising a call to at least one remote server installed in said telecommunication network,
- storing said at least one processing operation,
- receiving at least one message from said equipment (10, 11, 12, 13),
- applying at least one rule from said processing operation stored for said equipment by said communication platform (20) on the basis of said message from said equipment (10, 11, 12, 13),
- setting up a link to at least one remote server (22, 23, 24) in order to request at least one datum intended for applying a rule associated with said processing operation and/or in order to generate an action associated with said processing operation,
- generating, by way of said platform, at least one action associated with said processing operation stored by said communication platform (20) on the basis of said message from said equipment (10, 11, 12, 13),
- recording, by way of said platform, at least one result obtained at the end of said processing operation, and
- providing, by way of said platform, access to said at least one result to a subscriber to the access server.

2. Communication platform (20) according to Claim 1, comprising means enabling at least one rule and/or one action from said at least one processing operation to be selected by a subscriber from among rules and actions that are predefined in said communication platform (20).

3. Communication platform (20) according to Claim 1 or 2, comprising means for transcribing said list into a script and running said script during the processing of said received message.

4. Communication platform (20) according to Claim 3, comprising means for checking said script.

5. Communication platform (20) according to one of Claims 1 to 4, comprising means for connecting the platform to at least one device (22, 23, 24) installed in a telecommunication network.

6. Communication platform (20) according to any one of Claims 1 to 5, comprising means for sending at least one warning message to at least one equipment of said telecommunication network.

7. Communication platform (20) according to any one of Claims 1 to 6, **characterized in that** at least one action from said list orders said communication platform (20) to transmit at least one datum to said equipment (10, 11, 12, 13).

8. Communication platform (20) according to any one of Claims 1 to 7, comprising at least one communication module suitable for the transmission of at least one message with at least one equipment from among all of the equipments (10, 11, 12, 13).

9. Communication platform (20) according to any one of Claims 1 to 8, **characterized in that** said communication platform (20) sets up a link to at least one location server (24) that is installed in at least one network from among all of the telecommunication networks and that is needed in order to find out the geographical position either of said equipment (10, 11, 12, 13) or of at least one device (22, 23) installed in at least one network from among all of the telecommunication networks.

10. Method for remotely managing a set of equipments (10, 11, 12, 13) by means of at least one telecommunication network, said method including the following steps implemented by a communication platform (20):
- obtaining at least one processing operation consisting of a list containing at least one rule and at least one action for at least one equipment of said set identified by a subscriber to an access server (30, 31) capable of communicating with said communication platform (20), a processing operation being configured by said subscriber to the access server, and at least one said processing operation comprising a call to at least one remote server installed in said telecommunication network,
- storing said at least one processing operation,
- receiving at least one message from said equipment (10, 11, 12, 13),
- applying at least one rule from said processing operation stored for said equipment by said communication platform (20) on the basis of said message from said equipment (10, 11, 12, 13),
- setting up a link to at least one remote server (22, 23, 24) in order to request at least one datum intended for applying a rule associated with said processing operation and/or in order to generate an action associated with said processing operation,
- generating at least one action associated with said processing operation stored by said communication platform (20) on the basis of said message from said equipment (10, 11, 12, 13),
- recording at least one result obtained at the end of said processing operation, and
- providing, by way of said platform, access to said at least one result to a subscriber to the access server.

11. Remote management method according to Claim 10, wherein one said remote server is a security server, a payment server or a location server.

12. Remote management method according to Claim 10, wherein the remote server is a location server making it possible to obtain the location of said equipment.
